# EUROPEAN PATENT SPECIFICATION

(11) **EP 4 126 328 B1**
(45) Date of publication and mention of the grant of the patent: **08.11.2023**
(21) Application number: 21717359.0
(22) Date of filing: 31.03.2021
(51) Int. Cl.: B01J 6/00, B01J 8/00, B01J 8/08, B01J 8/16, B01J 8/18, B01J 8/32, C04B 7/45

(54) **REACTOR AND METHOD FOR CONVERSION OF A CARBONACEOUS MATERIAL**
REAKTOR UND VERFAHREN ZUR UMWANDLUNG EINES KOHLENSTOFFHALTIGEN MATERIALS
RÉACTEUR ET PROCÉDÉ DE CONVERSION D'UN MATÉRIAU CARBONÉ

(30) Priority: 03.04.2020 DK PA202000392
(43) Date of publication of application: 08.02.2023
(73) Proprietor: FLSMIDTH A/S, 2500 Valby (DK)
(72) Inventor: SCHMIDT, Iver, Blankenberg, 9520 Skørping (DK); DRIVSHOLM, Morten, Hvidbjerg, 9482 Blokhus (DK); CEDERGAARD, Niels, Ole, 9860 Randers (DK); JENSEN, Lars, Skaarup, 2625 Vallensbæk (DK)
(86) International application number: PCT/EP2021/058478
(87) International publication number: WO 2021/198358

(56) References cited:
- WO-A1-92/00801
- JP-A- S61 270 241
- US-A- 3 086 852
- US-A1- 2010 281 878
- US-A1- 2019 338 198

## Description

### Field of invention

The present invention relates to a method for converting a carbonaceous fuel such as alternative fuels, under reducing conditions into volatiles and a converted material and substantially separate the volatiles. The invention further relates to a reactor suitable for carrying out this method.

### Background

Production of cement is known to be a large emitter of emissions such as CO2. In order to make the production more sustainable it is desirable to utilize alternative fuels to provide thermal energy to the cement manufacturing operation. Previously this was utilized by injecting alternative fuels directly into a calciner. However, the time required for drying and subsequent de-volatilization of such fuels will depend on the water content of the fuel and the size and shape of the fuel particles and the chemical composition of the fuel, all of which vary widely for alternative fuels. Insufficient residence time for the alternative fuels typically results in incomplete combustion of the alternative fuels in the calciner due to the limited particle residence time, and the temperature profile of the calciner is affected. As a result, in most instances the amount of thermal energy that a calciner can derive from alternative fuels is limited.

Cement is manufactured at high temperatures and a cement manufacturing facility may therefore be a desired facility to utilize alternative fuels, since some of the energy already used to heat the cement raw materials may be utilized to convert low-grade alternative fuels or to burn hazardous waste in a safe manner.Cement raw meal consists of fine particles forming a powder, which is difficult to fluidize. One of the main reasons for this is the significant cohesive interparticle forces that enhance particle agglomeration. In 1973 D. Geldart developed a powder classification system, which classifies powders according to their fluidization characteristics. [Geldart, D., Powder Technol., 7, (1973), 285] . One of the types in Geldarts classification system is type C materials, or Geldart C materials, which are characterized by being unsuited for fluidization. Cement raw meal contains a significant amount of such Geldart C particles, and exhibit fluidization behavior like a Geldart C material. Thus, when attempting to fluidize such materials, then cracks, and channeling occur, which results in poor and unstable fluidization.

Geldart C materials are typically less than 30 micro meter and are considered cohesive. Particles this small tend to behave more as particle clusters, than single independent particles.

The fluidization behavior of a mixture of coarse and fine particles is defined by the fluidization behavior of the fine fraction in a wide compositional range. Thus, a mixture of fine particulate cement raw meal and coarser char particles will typically exhibit fluidization behavior similar to the cement raw meal, and only when the coarse fraction becomes dominant then it is the fluidization characteristics of the coarse particles that will determine the fluidization behavior

In EP3405728 alternatives fuels are utilized by subjecting such fuel to initial pyrolysis within a U-shaped loop seal reactor in which gas pulses fluidize the particles to facilitate movement of the solids through the reactor. During operation the mixing of alternative fuels and hot cement meal in a reducing atmosphere results in a large formation of gases. To obtain a steady operation proper sizing is essential with such a solution which may result in a large footprint and high CAPEX. During steady operation the pulsed air forms a dense-bed and the flow of solids inside reactor is a plug-flow pattern. It is important that the fuel and hot cement meal is properly mixed before it reach the dense bed since it otherwise may result in the formation of hot or cold spots which may lead to low conversion or risk of high temperature corrosion.

The alternative fuels may typically consist of solid particles substantially greater than the cement meal.

Particles with a density greater than the meal bed may therefore sediment out of the meal bed. This may include both carbonaceous material and non-carbonaceous particles such as stones and metals. In addition to particles greater than the cement meal being introduced, particles may also agglomerate or coalesce in the bed to form larger particles, lumps or buildups. If there are areas in the bed that are not effectively aerated, they are particularly prone to forming buildups if the material in the bed have a tendency to consolidate. This is promoted by volatile species in cement kilns at elevated temperatures, or by partially melted carbonaceous material. Sedimentation may disturb effective aeration - and may with time block a substantial fraction of the conduit through which aerated cement meal flows through.

US 2010/281878 A1 discloses a reactor for converting carbonaceous material with indirect heating.

It would be advantageous, therefore, to have a novel reactor and method in which alternative fuels can be efficiently utilized, which may provide proper aeration and which may reduce the risks of forming build-ups and sedimentation which may disturb operation.

### Summary of invention

With this background, it is therefore an object of the present invention to provide a method, by which it is possible to mitigate some of the drawbacks of the prior art. In an aspect of the invention these and further objects are obtained by a method for the conversion of a carbonaceous material comprising the steps of:
providing a carbonaceous material having a conversion temperature;
providing a powder material having a temperature higher than the conversion temperature of the carbonaceous material;
contacting the carbonaceous material and the powder material in an atmosphere configured to no more than partially oxidize carbon to CO₂, to obtain at least a partial conversion of the carbonaceous material into a converted material and a volatile product;
separating by specific gravity by directing a gas flow comprising the volatile product in a substantially upwards direction to provide a first fraction substantially comprising the volatile product and a second fraction substantially comprising additional components, wherein the contacting between the carbonaceous material and the powder material takes place in at least two different flow regimes.

This method provides an efficient conversion of carbonaceous material into a converted material and a volatile product, which are separated and may therefore be further processed separately. The volatiles may e.g. be used as fuel. The benefit of using a solid material as an energy carrier to the conversion process is among other that the gas present in the product stream is lower and typically inert. Additionally the thermal sink of the powder material helps to stabilize the temperature and thereby provides a process resilient towards temperature drops due to endothermic reactions as well as temperature increases due to e.g. partial oxidation of the carbonaceous material.

As the carbonaceous material and the powder material is contacted, the volatile product will form as the carbonaceous material is converted. Because the volatile products are in gas form at process condition and have a larger volume than the solid materials, the formation of volatile products provides a substantially upwards gas flow. The gas flow may carry particles in the substantially upwards direction if the velocity of the gas flow is above the entrainment velocity of the solids.

The development of volatiles should be controlled, by adjusting for example the inlet temperature of the powder material, the amount of powder material and/or the contact time between carbonaceous material and powder material, such that the carbonaceous material, powder material and/or converted material is contacted in at least two different flow regimes. Preferably the flow regimes are a lower dense phase and an upper diluted phase comprising more volatiles. The diluted phase is formed by the formation and upwards flow of volatiles which provide an upwards flow of carbonaceous material and powder material. The upwards flow of gas comprising volatiles and the carbonaceous material and powder material continues until the gas is separated into the first fraction, after which the carbonaceous material and powder material flow downwards due to gravity.

The dual flow regimes provides better mixing and contact between the carbonaceous material and powder material and provide more stable conversion conditions to avoid the formation of hot spots and cold spots.

By a powder material is meant a material that behaves like a powder when subjected to pulsed aeration irrespective of particle size distribution and comprising other solid constituents up to a concentration that doesn't compromise this behavior. This may as an example be cement meal.

The additional components may comprise the powder material, converted material and optionally non-converted or partially converted carbonaceous material.

Carbonaceous material is a material comprising carbon and which has energy stored in carbon such that the carbonaceous material may be utilized as a fuel. The carbonaceous material may preferably be alternative fuels and waste, biomass fuels, or mixtures thereof in the form of solids or a fluid.

The atmosphere configured to no more than partially oxidize carbon to CO₂, comprises a limited amount of oxygen, i.e. an amount of oxygen less than the amount of oxygen required to fully oxidize the provided carbonaceous material. The atmosphere may therefore be configured to only partially oxidize the carbon. Preferably the atmosphere may be a reducing atmosphere comprising reducing gases. The atmosphere may even be substantially free from oxygen to provide substantially no oxidization of carbon.

By at least a partial conversion of the carbonaceous material is meant that at least a part of the carbonaceous material is converted. Preferably, the powder material is added in an amount and having a temperature wherein substantially all the carbonaceous material is converted after is has been contacted with the powder material.

Volatiles are products which are in a gaseous state at process conditions, such as H₂, CO, CO₂, CH₄, H₂O, more generally written as CₓH_{y}O_{z}NᵥS_{w}Clᵤ (where x,y,z,v,w,u can have different values) or mixtures thereof.

The conversion of the carbonaceous material is a process at elevated temperatures in which the material changes its chemical composition and/or where the material undergoes a phase change. The conversion of the carbonaceous materials, as well as intermediate species, may include pyrolysis, gasification, cracking, partial oxidation, or combinations thereof. The conversion as well as the product selectivity of the reactions involving carbonaceous material might be controlled by co-feed selective co-reagents or precursors thereof, e.g. H₂O, alkaline or acidic co-reagents in gas, liquid, dissolved or solid state. Furthermore, the reactions might be manipulated by co-addition of solids with catalytic properties in the given process environment. The catalytically active co-added solids might act directly on the carbonaceous material or on selected intermediate products.

As an example a nickel containing catalyst may be added to enhance the formation of syngas CO + H2.

By conversion temperature is meant the temperature at which the carbonaceous material start to undergo such a conversion.

The gas flow comprising the volatile product may be gases formed by the conversion of the carbonaceous material optionally comprising an additional added gas.

By the wording "a first fraction substantially comprising the volatile product" means that at least 50w/w% of the carbonaceous material, powder material and converted material has been separated from the volatiles. Preferably more than 75w/w%, or even 90w/w% has been separated. By the wording "a second fraction substantially comprising additional components" means that maximum 30 V/V°/ of the volatiles developed during the conversion are present in the second fraction. Preferably a maximum of 20 V/V% of the volatiles or more preferably a maximum of 10 V/V% of the volatiles developed during the conversion are present in the second fraction.

All directions which are referred to are relative to the direction of gravity of the earth.

In a preferred embodiment of the invention the velocity of the gas flow in the substantially upwards direction is decreased to a velocity below an entrainment velocity of the additional components.

By lowering the velocity to below the entrainment velocity it is possible to form a spouting zone in which the solids fall downwards and thereby provide a gas comprising less solid materials and forming a third flow regime, a so called settling zone located above the diluted zone. The settling zone comprise less solids than the spouting zone / diluted zone and substantially comprise the volatile product. As the velocity decreases towards the entrainment velocity the gas flow carries progressively less solids and therefore becomes more diluted. When the gas flow velocity becomes lower than the entrainment velocity the solids are no longer carried by the gas flow. In this way the gas flow comprising the volatiles product becomes substantially free from the solids and a more pure gas comprising volatiles can be obtained from the method.

The velocity of the gas flow is dependent on the development of volatiles during the conversion. If a high conversion is achieved, or many volatiles are obtained the velocity is typically high. If the conversion is low and/or few volatiles are obtained the velocity may be close to, or even below the entrainment velocity of the additional components. In this case it will be necessary to provide a gas flow or a gas pre-curser to increase the volume of gas and therefore increase the gas velocity to above the entrainment velocity of the solids. It may therefore be said that the gas flow either will have to be lowered or be lower than the entrainment velocity of the additional components.

The entrainment velocity is dependent on the particle size, density, shape and weight. It may also be referred to as a pick-up or minimum transport velocity, since it is the velocity at which the gas can pick-up specific particles. A particular way of decreasing the velocity of the gas flow is by increasing the flow area of the gas, i.e. increasing the flow area of the gas from a first flow area to a second larger flow area.

In a preferred embodiment the method comprises the additional step of fluidizing the carbonaceous material and the heated powder material.

Fluidization of the carbonaceous material and the heated powder material provides better mixing of the materials, since the particles are in a dynamic fluid-like state. Fluidization of the particles may be achieved by providing a substantial upwards flow of a fluidizing fluid, e.g. a gas such as steam, nitrogen or air. The fluidization effect might also be achieved by introduction of a pre-cursor, which is converted to a fluidizing fluid when contacted with the process environment or a pre-conditioning unit.

It may be said that the addition of fluidization gas or pre-curser to the carbonaceous material and the heated powder material may be added from any direction. Upon being added, the fluidization gas will due to its low density flow upwards.

In a preferred embodiment of the invention the fluidization of the carbonaceous material and the heated powder material is achieved by providing pulses of fluid, preferably in a substantially upwards direction.

The amount of fluid, such as air, required to fluidize particles by pulses of fluid is much lower than by a continuous flow of fluid. This provide a more efficient fluidization, a lower addition of fluidizing fluid into the reactor, a lower transport of the fluid and later less fluid to de-dust and/or clean.

Additionally, in some case it might be preferred to introduce the fluidization fluid in a combination of a substantially constant flow and a pulsed flow, where the composition might be similar or different in the different types of fluidization flow. Another preferred solution is to have a constant flow fluidization flow enriched by a compound that either has an adequate vapor pressure when contacted with the fluidization fluid prior to entering the process. This may e.g. be achieved by bubbling a gas stream such as a air through a liquid and thereby saturated with vapors of the liquid corresponding to the vapor pressure]

In a preferred embodiment of the invention the method comprises the additional step of providing a reactant gas and contacting the reactant gas with a mixture of the heated pulverized material and the carbonaceous material.

The reactant gas may be added together with the carbonaceous material and/or the heated pulverized material and thereby be utilized to transport the materials into the reactor. Alternatively, the reactant gas may be added directly into the atmosphere configured to no more than partially oxidize carbon to CO₂. Reactants might also be added in a solid, liquid or dissolved state, which then evaporates at process conditions. Additionally, reactants might be added in the form of pre-cursors, which are converted to reactants when subjected to the process environment.

The reactant gas may be a gas comprising oxygen, such as air, pure oxygen, and/or CO₂.

By providing the reactant gas, into the atmosphere configured to no more than partially oxidize carbon to CO₂, it is possible to pyrolyze or even gasify the carbonaceous material in an atmosphere with no or little content of oxygen prior combustion, which only take place after addition of the reactant gas. This provides the effect that the amount of oxidized and non-oxidized carbon material can be balanced for a specific purpose. As an example H₂O can be added to enhance gasification or to adjust the composition of product. O₂ may be added to enhance exotherm reactions, e.g. char oxidation. The addition of O₂ may thereby help balance the conversion of carbon material through endothermic pyrolyzing reactions and exotherm reactions without an undesirable effect on product yield and composition, i.e. to improve the energy balance.

In a preferred embodiment of the invention the powder material and carbonaceous material are contacted and transported in an entrained flow in the atmosphere configure to no more than partially oxidize carbon. Preferably the entrained flow is in a substantially downwards direction. If the particles are fluidized, the fluidizing fluid is preferably provided in counter-flow from a direction substantially opposite of the entrained flow.

The entrained flow provides a controlled contact time between the carbonaceous material and the powder material. The entrained flow provides a better mixing of the carbonaceous material and the powder material since the entrained flow is opposite of the direction of the gas flow comprising volatiles. This improves heat transfer between the gas, powder and carbonaceous material resulting in improved conversion of the carbonaceous material.

The fluidizing fluid may be the reactant gas. This configuration provides the carbonaceous material to be at least partially converted during the entrained flow transport and thereafter at least partially combusted due to the entry of reactant gas.

In a preferred embodiment of the invention the carbonaceous material and the powder material is provided in a mass ratio 1:20 to 1:2, such as 1:5.

This ratio provides a good basis for the solid composite bed to response as a powder material that can be controlled. This ratio provides a good contact between powder and carbonaceous material and ensures that if the carbonaceous material becomes sticky (gum) it is coated in the powder material. This is especially important if the carbonaceous material contains larger pieces of carbonaceous material that form sticky intermediates when subjected to heating, e.g. larger pieces of plastics or tires. Additionally, this ratio ensures that the thermal sink capacity of the powder material can stabilize the process temperature against low as well as high temperature excursions.

In a preferred embodiment of the invention the ratio of oxygen to the total atmosphere after providing a reactant gas into the atmosphere configured to no more than partially oxidize carbon, i.e. lambda is below 0.2, such as below 0.1, preferably 0.05, more preferably 0.03.

Controlling oxygen (O₂) to the process environment to no more than partially oxidize carbon limits the secondary reactions including oxidation of the formed hydrocarbons to CO₂ and water which limits the yield of desired products. Furthermore, excessive oxidation might result in unwanted temperature rises that can destabilize the process environment as well as results in unwanted product composition.

In a preferred embodiment of the invention the powder material and carbonaceous material is contacted and maintained above the conversion temperature for at least 30 seconds, such as at least 120 seconds. Preferably the powder material and carbonaceous material is contacted up to 600 seconds.

Typically, a conversion time of carbonaceous material that is easily converted is around 30 to-120 seconds at a temperature above the conversion temperature. However, a contact time up to 600 seconds, ensure that bulky carbonaceous material such as coarse wood chips, tires and other materials which are hard to degrade may be at least partially converted.

In a preferred embodiment of the invention the heated powder material has a temperature around 600°C to 1000°C, preferably 700°C to 850°C such as 800°C.

This temperature ensures that minor ingress of oxygen to the process only results in partial combustion and thereby reduces the need for insurances against leaking. This temperature is sufficient for fast conversion of carbonaceous material into volatiles. For safety reasons the heated powder material should have a temperature sufficient to carry out conversion at temperature above the autoignition temperature of the mixture comprising volatiles, to avoid an explosion in case of a large amount of oxygen entrainment, e.g. due to a leak.

In a preferred embodiment of the invention the powder material is cement meal and preferably wherein the heating of the cement meal is carried out in a cement clinker manufacturing process, such as in the pre-heater or calciner of the cement clinker manufacturing process.

In a preferred embodiment the carbonaceous material may be selected from the groups comprising alternative fuels and waste, biomass fuels, and fossil fuels.

Alternative fuels may be selected from the list comprising: municipal waste, shredded tires, furniture, carpets, wood refuse, garden waste, kitchen and other household waste, paper sludge, paper, sewage sludge, liquid waste, bleaching earth, car parts, plastic, plastic bales, and hazardous medical waste.

Fossil fuels may be lignite, anthracite, bituminous coal, petcoke etc.

Biomass includes straw, wood etc.

According to another aspect, the invention relates to a reactor for converting a carbonaceous material, the reactor is configured to accommodate a solid powder material and having an upper portion and a lower portion, the reactor comprising:
at least one solid inlet for providing solid material such as carbonaceous material and/or a powder material to the reactor, the solid inlet is preferably located in the upper portion of the reactor,
at least one solid material outlet comprising adjusting means configured to adjust the amount of solid material in the reactor,
a gas outlet preferably located in the upper portion of the reactor,
and gas-solid separation means configured to separate a gas from a solid material, preferably located in the upper portion of the reactor.

By having a reactor according to the invention, the major separation of solids and gas takes place in the reactor, instead of e.g. a nearby cyclone. The present invention therefore provides a reduced footprint since transport conduits to a cyclone and additional cyclones are redundant.

Solid material in the form of a carbonaceous material and a heated powder material are added in the upper portion of the reactor. The conversion of the carbonaceous material takes place as the carbonaceous material contacts and is heated by the heated powder material towards the solid outlet. During the conversion volatiles form an upwards flow towards the gas outlet. This configuration having both the solid inlet and gas outlet located in the upper portion provides a counter-flow between solids and gas
and provides an increased contact time between solids added to the reactor and the solids and gas already in the reactor. Better mixing and heat transfer is also achieved.

Preferably the reactor may separate at least 75%, such as at least 90 % of the solids from the gas. The countercurrent flow pattern also reduces the adverse effect of secondary reactions involving the formed hydrocarbons.

In a preferred embodiment of the invention the gas-solid separation means is configured to separate gas and solids using gravity as the dominant force to reduce the velocity of the gas to below an entrainment velocity of the solids.

In one or more embodiments the reactor may be configured to provide at least two different flow regimes.

The reduction of the velocity to below the entrainment velocity forms a dense phase generally in the lower portion of the reactor and a dilute phase generally in the upper portion of the reactor where the velocity reduction takes place. In the area of the reactor where the velocity drops below the entrainment velocity a spouting zone forms.

Preferably the reactor may be configured to provide at least three different flow regimes. The third flow regime is a settling zone substantially comprising gas. The settling zone is located above the spouting zone/dense zone and generally located near the gas outlet.

In a preferred embodiment the reactor comprise at least one solid material inlet located in the spouting zone and/or at least one solid material inlet located in the settling zone.

The gas-solid separation means having gravity as the dominant force preferably has a flow in a horizontal or more preferably an upwards direction. By upwards direction is meant any direction with a vertical offset from horizontal.

If the flow of gas and solids are separated in the gas-solid separation means having a horizontal or relative low offset angle to horizontal in e.g. a conduit, the solid particles will settle on the bottom of the conduit due to gravity and friction between solids and the conduit surface. As the direction of flow is closer to vertical than horizontal it provides the advantage that solids are prevented from accumulating in e.g. a conduit, but instead fall downwards towards the lower portion of the reactor. The latter configuration provides different zones at different heights in the reactor, since the gas will comprise less solids the higher the location in the reactor. In the lower portion of the reactor the gas will be dense, i.e. comprise high amount of solids, whereas in the upper portion of the reactor the gas will be dilute, i.e. comprise a low amount of solids.

The gas velocities in the reactor are mainly due to the development of volatiles and are typically between 1 to 10 m/s. A flow having a velocity in this range typically is too low for separation in a cyclone without providing a fan or additional supply of gas to increase the velocity.

In a preferred embodiment of the invention the gas-solid separation means is a section of the upper portion of the reactor having a larger cross-sectional dimension value than the lower portion.

The cross-sectional dimension value may be a diameter or a cross-section depending of the shape of the reactor. As the cross-sectional dimension value is increased the velocity of the gas flow will decrease. Preferably the upper portion of the reactor has a cross-sectional dimension value to decrease the velocity of the gas to below the entrainment velocity. This increase in flow area provides a high velocity decrease over a small height enabling a more compact reactor.

In a preferred embodiment of the invention the solid material outlet is located in the lower portion of the reactor. The adjusting means adjusts the level or amount of solids in the reactor.

This adjustment may be based on the weight or height of the column of solids in the reactor and regulate the volume of solids that exits the reactor.

The adjusting means may as an example be a screw feeder. Based on an input parameter the screw feeder may regulate the speed at which solids are removed from the reactor. The input parameter may be based on a height measurement from a laser, a weight measurement of a scale, a particulate matter sensor etc. such that a steady amount of solids are present in the reactor.

In a preferred embodiment of the invention the reactor additionally comprises fluidizing means adapted for fluidizing solid powder material. The fluidizing means is preferably located in the lower portion of the reactor and wherein the adjusting means is a conduit having a fluid trap configuration.

Fluidizing means provides an efficient mixing of particles in the reactor. Additionally, the dynamic fluid-like state of fluidized particles allows the adjusting means to be configured as a fluid trap / siphon. In this way the shape of the fluid trap configuration determines the amount of powder material in the reactor, more specifically the height of the fluid trap determines the level of material in the reactor. If an amount of powder material larger than this amount is present in the reactor, the increased height results in an increased pressure of "fluid" and thus the powder material will simply flow through the fluid trap to equalize pressure difference.

The fluidizing means may be a plurality of nozzles distributed in the lower portion of the reactor to provide a fluid or preferably a gas. Preferably the gas may be provided through a gas permeable distributor which is comprised of, for example, sintered metal plates, porous ceramic material and similarly porous material preferably having a porosity between about 5 microns to about 100 microns. The permeable distributor must be able to withstand the localized operating conditions of the reactor, and an underlying aeration chamber through which the gas is provided.

The fluid trap configuration may comprise a first and second conduit. The first conduit being located centrally between the reactor and the second conduit. It is fluidly attached to the lower portion of the reactor and a lower portion of the second conduit, thereby allowing powder to flow from the reactor, through the first conduit, to the upper portion of the second conduit. The height of the second conduit thereby determines the amount of solids in the reactor.

In a preferred embodiment, the reactor is oriented to provides a substantial vertical direction of flow, the first conduit is oriented to provide a substantially horizontal flow direction and the second conduit is oriented to provide a substantial vertical flow direction.

Preferably the first and/or second conduit additionally comprise fluidizing means. Preferably the reactor together with the first conduit and the second conduit has a substantial U-shape or J-shape providing the siphoning effect / fluid trap.

The first conduit, located between the reactor and the second conduit, may preferably have a floor of comprising aeration means configured to fluidize and guide powder material from the reactor to the second conduit.

Preferably the first conduit is configured with means to ensure that dense and/or non-combustible particles are guided towards one or more exit points. The exit point may be a drain point located between the reactor and the second conduit, such as in at a lower portion of the first conduit.

Material may be drained out of this drain point opening by a sluice system which preferentially removed material close to the outlet - including sedimented material.

To provide a more effective drainage, it is preferred that a continuous flow of material is provided to the drain-out point and the material is not upheld prior to reaching the drain point. The drain point may be used during continuous operation, when the meal flow is stopped, when draining out material, or during maintenance to remove unintended material build-ups or accumulations.

In a preferred embodiment a portion of the floor is inclined at an angle of at least 40° with respect to the horizontal plane. Preferably, the floor may be inclined at an angle of between 40° and 50°, such as 41°, 42°, 43°, 44°, 45°, 46°, 47, °48, or 50°. In a preferred embodiment of the invention, the flow of solid material, therefore initiates in the reactor as a substantially vertical flow, followed by a partially downwards direction along the inclined floor of the first conduit towards a lower and central portion of the first conduit. The powder material may then flow partially upwards along an opposite located inclined floor, before reaching the second conduit.

Preferably the cross-section of the first conduit is inclined towards an axial center line.

Preferably aeration means are distributed across the floor of the first conduit.

The inclined floor ensures that dense and non-combustible materials are guided towards a central lower portion of first conduit and to avoid build-ups on the bottom/floor of the first conduit, reactor and/or second conduit.

It is also possible to provide a fluid trap configuration on the material inlet. This provides a closed environment between the two fluid traps, i.e. an isolated reactor which is separated from other coupled processes.

Preferably the fluidizing means is adapted to fluidize powder material by providing pulses of gas.

To overcome the problems of fluidization of cohesive powders, e.g. Geldart C powders, it is necessary to break or disrupt the cracks and channels formed in the powder bed. This can be achieved by adding at least a proportion of the fluidization gas as pulses. Hereby, cracks or channels formed when introducing the fluidization medium collapses in the pause between the pulses resulting in powder bed rearrangement before the next pulse of fluidization medium is introduced. Thus, the cracks or channels will form and collapse over and over resulting in a quasi-fluidized bed that has characteristics similar to a fluidized bed despite consisting of particles that is not fluidized by constant flow.

Fluidizing by pulses of gas instead of a continuous gas flow also allows for a more efficient fluidization with less gas.

In a preferred embodiment of the invention the second conduit comprise gas-solid separation means. Preferably the gas-solid separation means is a section of the second conduit having a larger cross-sectional dimension value proving a larger flow area. By having an increase in flow area the second conduit is configured to reduce the velocity of gas and thereby to provide at least two different flow regimes, a lower dense phase and an upper spouting zone / diluted zone.

Preferably the second conduit may be configured to provide at least three different flow regimes. The third flow regime is a settling zone substantially comprising gas. The settling zone is located above the spouting zone/dense zone and generally located near the gas outlet

In a preferred embodiment of the invention the reactor is configured to comprise two different spouting zones, and optionally two different settling zones.

In a preferred embodiment of the invention the first conduit is configured to provide a protective layer of solids above a at least a portion of the lower surface of the first conduit.

This is achieved by providing a cross-sectional dimension value of the first conduit that varies through the length of the conduit. Preferably the cross-sectional dimension value may increase and then decrease along the conduit. Preferably the cross-sectional dimension value increase towards a half point of the conduit, and then decrease. It is preferred that the first conduit has a larger cross-sectional dimension value at the half point than cross-sectional dimension values of reactor and the second conduit.

This design may be referred to as an extended radius design of the fluid trap configuration.

It has been observed that the flow pattern in a fluid trap configuration has a plug flow type pattern. This results in a vector pattern where the 'inner' vectors relative to the turning point has a lower residence time compared to the outer vectors. As the cross-sectional dimension value is increased in the first conduit, the conduit exceeds the hydraulic diameter of the inlet leg. It has been found that the vectors 'outside' this diameter gradually reduces to zero, i.e. it forms a quasi-stationary layer.

Thus, an extended radius design result in autogenous formation of a quasi-stationary layer of material acting as a protective layer between the solids in motion and the stationary surfaces. The extended radius also directly applicable in other situations where the geometry enables a change in direction of powder flow.

In a preferred embodiment of the invention the first conduit comprises an internal mesh.

The formation of a protective layer may be reinforced by placing a suitable grid or mesh on the material side of the conduit. The optimal pitch size and geometry will differ depending on the types of material being processed as well as the possible presence of foreign objects with properties that differ significantly from the materials being processed in the unit. These foreign objects might be parts of the upstream construction like refractory debris or pebbles or metal pieces from SRF. Thus, the grid must be designed in such a way that these foreign objects doesn't block the grid or results in malfunctioning of the aeration functionality. Preferably the mesh size is corresponding to 15 to 50 mm opening.

In a preferred embodiment of the invention the reactor is fluidly connected to the second conduit by means of a by-pass conduit attached to the upper portion of the reactor and the upper portion of the second conduit. This allows the gas in the upper portion of the reactor which is dilute, i.e. comprise a low amount of solids to flow towards to the second conduit.

When the introduction of gaseous species or formation of volatiles, becomes significant in the reactor then it is preferential to make arrangements to avoid large pressure differences between the reactor and the second conduit in order to establish stable operation. This can be obtained by connecting the two conduits at locations where the gas will be dilute. In a preferred embodiment the a gas outlet is located adjacent the by-pass conduit between the reactor and the second conduit.

Further presently preferred embodiments and further advantages will be apparent from the following detailed description and the appended dependent claims.

### Brief description of drawings

The invention will be described in more details below by means of non-limiting examples of presently preferred embodiments and with reference to the schematic drawings, in which:
Fig. 1 shows a schematic cross-sectional view of a reactor for converting a carbonaceous material according an embodiment of the invention;
Fig. 2 shows a schematic cross-sectional view of a reactor for converting a carbonaceous according to another embodiment of the invention, wherein the reactor comprises a material screw for regulating solid material in the reactor;
Fig. 3 shows a schematic cross-sectional view of a reactor for converting a carbonaceous material according to another embodiment of the invention wherein the reactor comprising a first and second conduit that together with the reactor forms an essential U-shape;
Fig. 4 shows a schematic cross-sectional view of a reactor for converting a carbonaceous material according to yet another embodiment of the invention, wherein the reactor comprises a gas by-pass conduit;
Fig. 5 shows a schematic cross-sectional view of a reactor for converting a carbonaceous material according to another embodiment of the invention, wherein the second conduit has an increase in flow area;
Fig. 6 shows a schematic cross-sectional view of a reactor for converting a carbonaceous material according to another embodiment of the invention wherein the reactor has an extended radius design; and
Fig. 7 shows a schematic overview of an extract of a cement manufacturing process comprising a reactor according to one embodiment of the invention.

### Detailed description

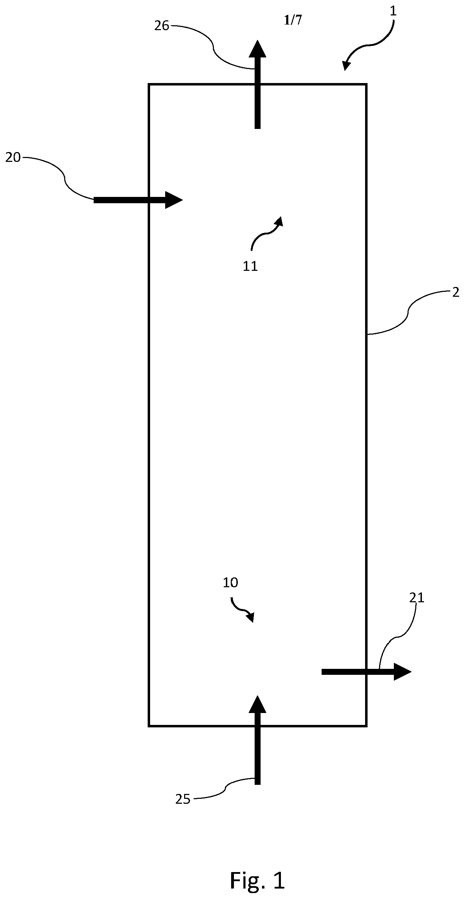

Fig. 1 shows a schematic drawing of a reactor 1 for converting a carbonaceous material. The reactor 1 has a reactor chamber 2 which is configured to accommodate a solid powder material. The reactor 1 has a lower portion 10 and an upper portion 11 and comprises a solid material inlet 20 for providing solid material to the upper portion 11 of the reactor 1. The solid material inlet 20 may be located in the side as showed or alternatively in the top. The solid material inlet 20 is suitable for allowing entry of carbonaceous material and/or a powder material into the reactor.

A gas outlet 26 is located in the upper portion 11 of the reactor 1 and a solid material outlet 21 is located in the lower portion 10 of the reactor 1. The solid material outlet 21 comprises adjusting means configured to adjust the level and/or amount of solid material in the reactor.

The reactor chamber 2 and the location of the solid material inlet 20, the gas outlet 26 and the solid material outlet 21 is arranged to provide gas-solid separation. In the particular embodiment this is achieved by having the gas outlet in the upper portion 11 and the solid material outlet in the lower portion 10 and located at different heights spaced so that the gas flow at the gas outlet has a velocity below an entrainment velocity.

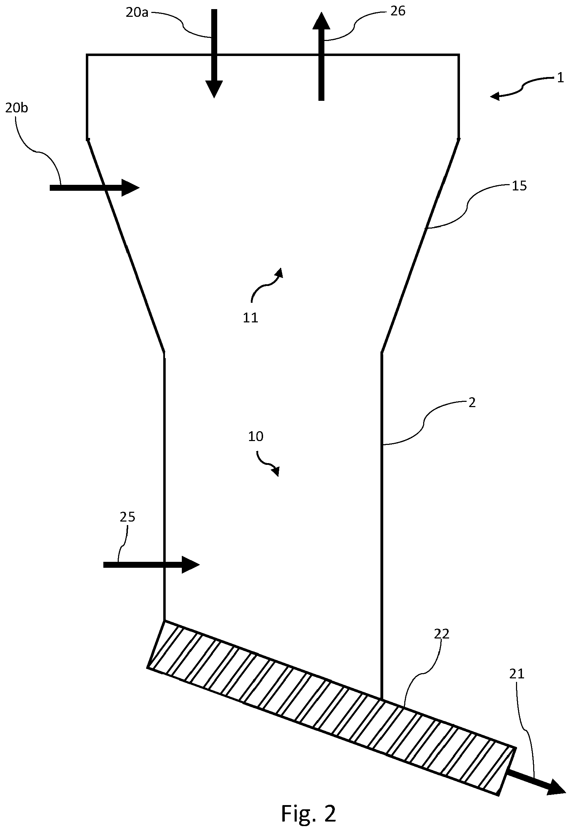

During intended use a carbonaceous material having a conversion temperature is added to the reaction chamber 2 together with a powder material which has a temperature higher than the conversion temperature of the carbonaceous material. The solids may be pneumatically transported to the reactor chamber 2 or may be mechanically feed. In Fig. 1 both the powder material and the carbonaceous material are added through the solid material inlet 20, but they may also be added through different inlets as shown in Fig. 2. The reactor 1 is operated with an environment inside the reactor chamber 2 that is configured to no more than partially oxidize carbon to CO₂. Preferably the ratio of oxygen to the total atmosphere in the reaction chamber (lambda) is below 0.15, such as below 0.12, preferably 0.05, more preferably 0.03.

The carbonaceous material and powder material falls downwards inside the reaction chamber 2 while contacting. As the carbonaceous material is heated to or above the conversion temperature, conversion of the carbonaceous material into a converted material and a volatile product takes place. The converted material will along with powder material and unconverted carbonaceous material fall further down towards the bottom of the reaction chamber 2. The adjusting means at the solid material outlet 21 adjust the amount of solid material in the lower portion 10 of the reactor chamber 2. This adjustment may be made according to a desired column height of the solid material and/or to obtain a desired retention time to allow the carbonaceous material to convert. The retention time should be at least 30 seconds, but depending on the specifications (type, size, conversion temperature etc.) of the carbonaceous fuel the retention time may be at least 120 seconds and up to around 600 seconds.

The volatiles converted from the carbonaceous material flow upwards towards the gas outlet 26 against the downwards flow of solids. This ensures better mixing and heat transfer between the solids. The dimensions of the reactor 1 is configured such that the gas velocity at the gas outlet 26 is below an entrainment velocity so that little or no solids are carried out through the gas outlet 26. The gas velocity can be controlled by adjusting the temperature in the reactor 1, adjusting the retention time or by adding a gas through a gas inlet 25.

Turning now to Fig. 2 showing a reactor 1 according to another embodiment of the invention. The reactor has a reactor chamber 2 having a lower portion 10 and upper portion 11. The flow area of the reaction chamber 2 increases in the upper portion 11 of the reactor chamber 2, due to an increasing cross-sectional dimension value (the diameter) of the reactor chamber 2. When the volatiles flow upwards from the lower portion 10 to the upper portion 11, the pressure and also the velocity of the gas is reduced below the entrainment velocity of the solids. In the embodiment shown the reactor 1 has two solid material inlets 20a and 20b, both located in the upper portion 11. Carbonaceous material may can be added to the reactor chamber 2 through material inlet 20a, which allows the carbonaceous material to heat exchange with the hot volatiles before it is contacted with the powder material entering the reactor chamber through solid material inlet 20b. The solid material outlet 21 is located in the lower portion 10 adjacent a fed screw 22. The fed screw 22 mechanically transports the solid material from the lower portion 10 of the reactor chamber 2. The rotational speed of the feed screw 22 may be adjusted to keep a steady level of solid materials in the reactor chamber 2.

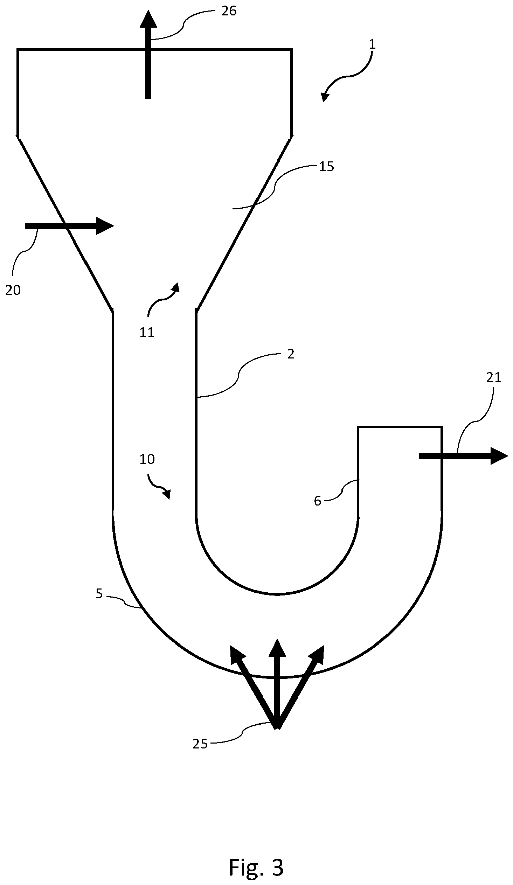

Turning now to Fig. 3 showing the reactor 1 according to yet another embodiment of the invention, wherein the lower portion 10 of the reactor 1 has a fluid trap configuration in the form of a U-shape and the means for adjusting solid materials in the reactor 1 is one or more fluid inlets 25 configured to inject fluids and thereby fluidize the powder material. The reactor 1 comprises a first conduit 5 which seen in the cross sectional view has an essentially half annulus shape with its two opening oriented upwards. One end of the first conduit is fluidly connected to the lower portion of the reactor chamber 2. A second conduit 6 is oriented substantially vertical and has its lower end fluidly attached to the other end of the first conduit 5. The fluid inlets 25 are located in the bottom portion of the first conduit 5.By injecting fluid through the fluid inlets 25 and fluidizing powder material in the reactor 1 it is the weight of the material column in the reactor chamber 2 and second conduit 6 together with the location of the solid material outlet 21 that determines how much powder is in the reactor 1. The diameter in at least a part of the upper portion 11 is gradually increasing towards the top of the reactor chamber 2 to provide a conically shaped portion 15. This provides a gradually increasing flow area in the reactor chamber. It may be said the increase in flow area may be a sudden increase.

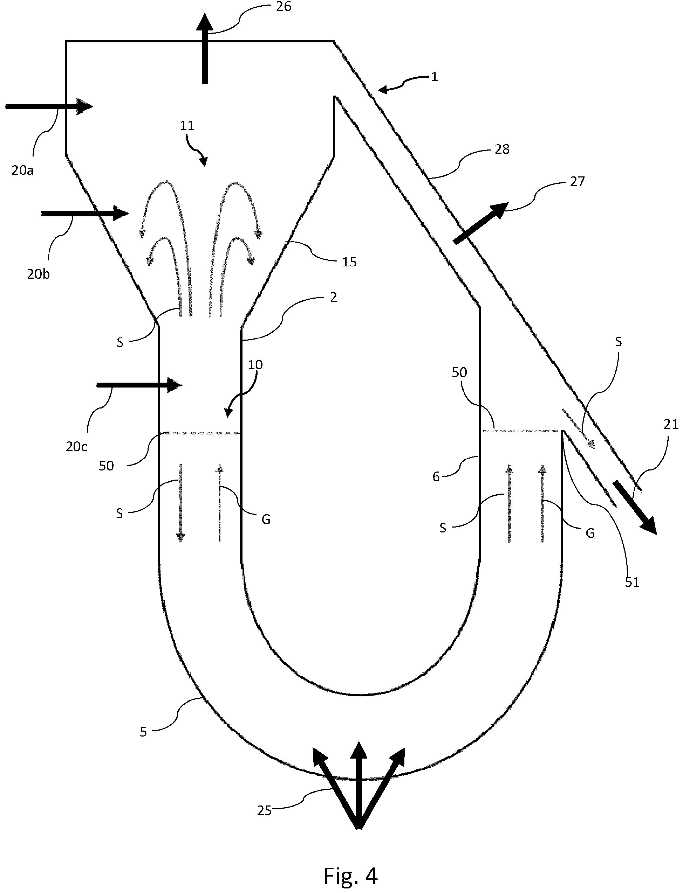

The method of converting carbonaceous material and the flow routes in the reactor 1 will now be described in more detail with reference to Fig. 4, which shows a reactor 1 comprising a bypass conduit 28 fluidly connecting the upper portion 11 of the reactor chamber 2 with upper end of the second conduit 6. A gas outlet 27 is located in the by-pass conduit 28.

During intended use, a carbonaceous material and a powder material is added to the reactor chamber 2 through the solid material inlet 20a, 20b and/or 20c. The Carbonaceous material has a conversion temperature and the powder material has a temperature higher than the conversion temperature. Once added to the reactor chamber 2 the carbonaceous material and the powder material is contacted and the carbonaceous material starts to convert into a converted material and a volatile product. The atmosphere inside the reactor chamber 2 is configured to no more than partially oxidize carbon to CO₂. During use, solids (i.e. carbonaceous material, powder material, and converted material) falls due to gravity from the upper portion 11 towards the lower portion 10 and fill up the first conduit 5. By injecting a gas through the fluid inlets 25 the solids are fluidized and distributed between the lower portion 10 of the reactor chamber 2, the first conduit 5 and second conduit 6. The dotted lines 50 illustrates the column height of the solids in the situation where the fluidized column of solids in the reactor chamber 2 and the second conduit 6 has the same density, i.e. they are equally high. Below the dotted lines 50 the solids are present in a dense phase. The upper edge 51 in conduit 6 determines the height of the fluidized column of solids in the conduit 6 and thereby also height of the fluidized column of solids in the lower portion 10 of the reactor chamber 2. When solids build up further than the height 50, the solids flow through the first conduit 5 and second conduit 6 in a plug flow type pattern to above the upper edge 51 to adjust the equilibrium between the weight of the two fluidized columns of solids. The flow direction of the solids are indicted by the arrows mark with "S". The conversion of the carbonaceous material into volatiles and converted material take place in both the reactor chamber 2, the first conduit 5 and second conduit 6. The flow direction of the volatiles and fluidization gases are indicated by the arrows mark with (G). Due to the development of volatiles the upwards gas flow in the lower portion 10 of the reactor chamber 2 typically has a velocity higher than the entrainment velocity of the solids. Solids are therefore picked-up by the gases and lifted upwards towards to upper portion 11 of the reactor chamber 2 forming an area in the reactor chamber with a low concentration of solids, i.e. a diluted zone. This zone is located above the dotted line 50. When the gases and solids reach the conically shaped portion 15, the velocity drops below the entrainment velocity and the solids may no longer be suspended by the gas. This provides a spouting zone where solids again fall downwards towards the lower portion 10 of the reactor chamber 2 and the gas continues upwards substantially free from solids. This flow of solids is similar to a fountain and is illustrated by the arrows "S" in the upper portion 11 of the reactor chamber 2. During operation the solids will flow in several directions as illustrated by the arrows marked with "S", but looking from an overall material balance view the solids will move from the upper portion 11 through the lower portion 10, the first conduit 5 and the second conduit 6.

Any volatiles which are developed in the second conduit 6 will flow upwards together with the solids. Once the flow of solids and gas pass the upper edge 51, the substantially all solids will flow through the solid material outlet 21 while the gases will continue upwards through the by-pass conduit 28 towards the gas outlet 26 and/or 27.

The gas provided through the fluid inlet 25 is preferably provided in pulses providing a more efficient fluidization with less amount of gas. The gas may comprise a reactant gas, an inert gas or combinations thereof.

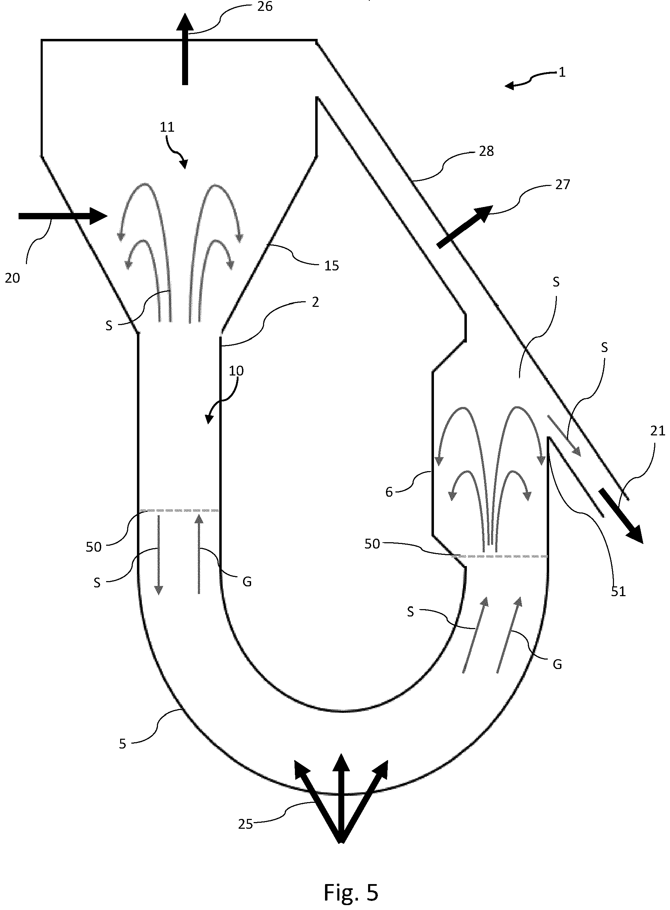

Turning now to Fig. 5 showing a reactor 1 according to yet another embodiment, wherein the second conduit 6 has an increase in flow area. The increase in flow area may be a graduate increase or a sudden increase which allows the velocity of any gas flow in the second conduit to decrease to below the entrainment velocity of the solids. The embodiment shown in Fig. 5 has two spouting zones. This is beneficial when only partial conversion of the carbonaceous material takes place in the reactor chamber 2 and when significant conversion might take place in the first conduit 5 or even second conduit 6. If the second conduit 6 is not properly sized to contain the developed volatiles, the development of volatiles may result in a gas velocity above the entrainment velocity of the solids. This results in that the dense phase in the second conduit 6 becomes diluted and an undesired flow pattern involving a flow of volatiles and solids to the gas outlet 27. By increasing the cross-sectional dimension of a portion the second conduit 6 to provide a portion having an increased flow area a spouting and settling zone is established where entrained powder drops out and eventually spills over the edge 51 towards the solid material outlet 21. This results in a stable solids stream from the reactor chamber 2 to the outlet 21, which significantly improves the operation of the overall process and allows for smaller sizing of the second conduit 6. If the reactor 1 is operated with easily convertible carbonaceous material the development of volatiles essentially takes place in the reactor chamber 2. In this situation the embodiment of Fig. 4 may be sufficient for stable operation. If the reactor 1 is operated with larger pieces of carbonaceous material or carbonaceous material which is harder to convert, the development of volatiles may take place through the entire reactor or even mainly in the second conduit. In this situation a spouting zone and settling zone in the second conduit, or in both the reactor chamber 2 and the second conduit 6 is beneficial for stable operation of the reactor 1.

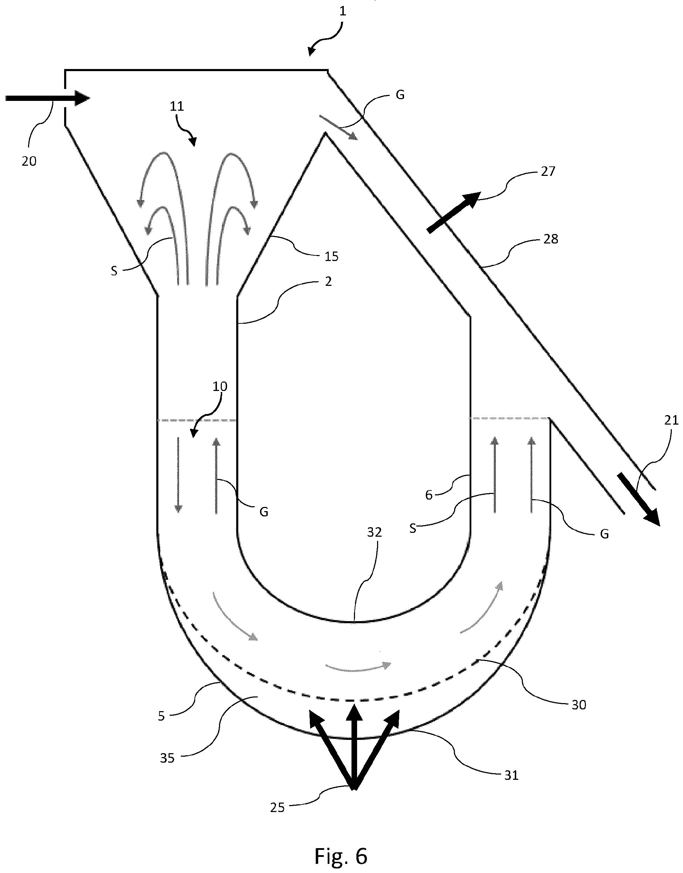

Turning now to Fig. 6 showing the reactor 1 according to yet another embodiment wherein the first conduit 5 has a so-called extended radius design. It can be seen that the cross-sectional value (i.e. the distance) between the upper conduit wall 32 and lower conduit wall 31 varies through the first conduit 5. A mesh 30 is optionally located in the first conduit 5 at a constant distance from the upper conduit wall 32. This provides a solid free void 35 below the mesh 30. The mesh ensures that the solids are not in direct contact with the lower conduit wall 31. When reactant gas is provided through the fluid inlets 25, a localized temperature increase may be seen due to oxidizing of the carbonaceous material. The mesh 30 ensures that the lower conduit wall 31 is not damaged by the elevated temperatures, e.g. due to material build-ups or high-temperature corrosion which can be expected when firing with alternatives fuels comprising chlorides and/or sulfur. The mesh 30 is easy replaceable compared to the first conduit 5.

The reactor 1 shown in Fig. 5 only has the gas outlet 27. Volatiles and reactant gas from the reactor chamber 2 will therefore flow from the upper portion 11 of the reactant chamber 2 through the by-pass conduit 28 towards the gas outlet 27.

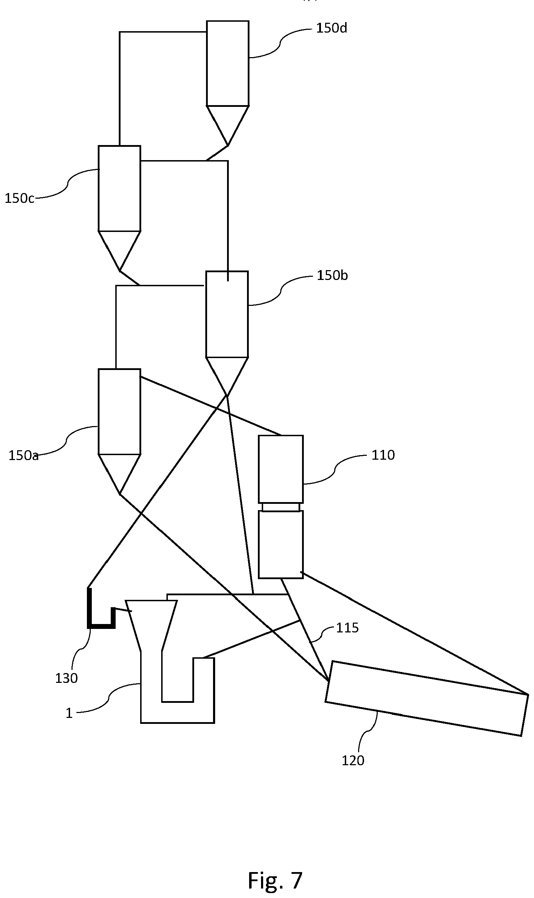

Turning now to Fig. 7 showing the reactor 1 installed in connection with a pre-heater tower 100, calciner 110, and a kiln 120 of a cement clinker manufacturing plant. The kiln 120 and the calciner 110 is connected by a kiln riser 115. Cement raw meal is fed to the raw meal inlet of the uppermost stage preheater cyclone 150d. From that point the raw meal flows towards the rotary kiln 120 through the cyclones of the preheater and the calciner 110 in counter flow to hot exhaust gases from the rotary kiln 120, thereby causing the raw meal to be heated and calcined. Calcined meal is directed from calciner 110 to bottom stage cyclone 150a where the calcined meal is separated from calciner exhaust gas. The calcined raw meal is burned into cement clinker in the rotary kiln 120, and the cement clinker are cooled in the subsequent clinker cooler by means of atmospheric air (not shown). Some of the air thus heated is directed from the clinker cooler via a duct to the calciner 110 as so-called tertiary air (not shown).

The reactor 1 is located adjacent to the calciner 110 and the kiln riser 115 and is optionally positioned so that hot cement meal will move by gravity from the cyclone stage 150b. Hot cement meal from 150b is split between the reactor 1, the kiln riser 115, and the calciner 110 in an adjustable ratio between 0 to 100%. The amount of hot cement meal diverted to reactor 1 will depend upon input rate and conversion time of the alternative fuel. The balance of hot cement meal will be split between the kiln riser 115 and the calciner 110. Typically, 50 to 70% of the hot cement meal is directed to the calciner 110 and the majority of the remaining is sent to reactor 1. The hot cement meal from cyclone 150b will typically have a temperature in the range of 730 - 830 °C. The hot cement meal from 150b preferentially passes through a loop seal 130 that functions as a gas barrier that in essence prevents conversion products flowing into 150b as well as prevents gases from 150b to flow into reactor 1.

The unconverted alternative fuel and the hot cement meal is directed into the pyro system, most preferably to the calciner 110 via the kiln riser 115. Some or all of the conversion products from reactor 1 can be introduced into the kiln riser 115 to create a reduction zone to reduce the NOx produced in kiln 120 or be introduced directly into the calciner 110. In another embodiment, some or all the conversion products i.e. volatile gases, from reactor 1 can be utilized in the rotary kiln burner. In a further embodiment, some or all of the conversion products gas can be utilized outside of the cement process, such as in a process to make combustible gases.

Alternatively, hot cement meal can be diverted from other cyclones in the preheater, such as from 150c or 150a, into the reactor 1. The hot cement meal is optionally passed through a loop seal 130 that functions as a gas barrier to the material inlet of reactor 1. The bottom of the loop seal might optionally be equipped with a bottom outlet for oversized particles, which may in turn be connected to the kiln riser 115, kiln inlet or to a separate container.

Preheaters can be designed in a multitude of configurations with variations in number of cyclones with full or partial split of gas, as well as solids, between the individual cyclones. In some cases, it might be preferable to take a part of the solid from other cyclones or a mixture thereof of in order to obtain desired process conditions in the calciner 110.

The calciner 110 configuration depicted in Fig. 6 is a so-called "in-line calciner" system in which the calciner is positioned relative to the kiln riser 115 so all of the kiln exhaust gases pass through the calciner 110. The method of the present invention can also be effectively used with other configurations, including "separate line calciner" systems in which the calcining chamber is at least partially offset from the kiln riser 115 so that kiln combustion gases do not pass through the calciner, and where the combustion air for the calciner is drawn through a separate tertiary air duct.

## Claims

1. A reactor for converting a carbonaceous material, the reactor is configured to accommodate a solid powder material and having an upper portion and a lower portion;
the reactor comprising:
at least one solid material inlet for providing a solid carbonaceous material and a powder material to the reactor,
at least one solid material outlet configured for allowing the removal of converted carbonaceous material and/or a powder material, said outlet comprising adjusting means configured to adjust the level or amount of solid material in the reactor,
fluidizing means adapted to fluidize powder material,
a gas outlet preferably located in the upper portion of the reactor,
and gas-solid separation means configured to substantially separate a gas from a solid material, wherein the gas-solid separation means being a section of the upper portion of the reactor having a larger flow area than the lower portion of the reactor configured to separate gas and solids in a substantially vertical flow and to reduce the velocity of the gas to below an entrainment velocity of the solids,
wherein the reactor being configured so that the conversion of the carbonaceous material takes place as the carbonaceous material contacts and is heated by the heated powder material.

2. The reactor for converting a carbonaceous material according to claim 1, wherein the at least one solid inlet is located in an upper portion of the reactor.

3. The reactor for converting a carbonaceous material according to claim 1 or claim 2, wherein the outlet has a fluid trap configuration which provides the adjusting means that adjusts the level of solid material in the reactor when the powder material is fluidized.

4. The reactor for converting a carbonaceous material according to claim 3, wherein the fluid trap configuration comprises a first conduit being fluidly connected to the lower portion of the reactor and a lower portion of a second conduit is fluidly connected to the first conduit, thereby allowing powder to flow from the reactor, through the first conduit, to an upper portion of the second conduit.

5. The reactor for converting a carbonaceous material according to claim 4, wherein the first conduit is configured to provide a protective layer of solids above a at least a portion of the lower surface of the first conduit by varying the cross-sectional dimension value through the length of the first conduit.

6. The reactor for converting a carbonaceous material according to claims 4 to 5, wherein the first conduit comprises an internal mesh.

7. The reactor for converting a carbonaceous material according to any previous claim, wherein the at least one solid material inlet is configured to substantially prevent upstream process gas to flow into the reactor together with the carbonaceous material and/or a powder material.

8. The reactor for converting a carbonaceous material according to claims 4 to 7, wherein the gas outlet is fluidly connected to the second conduit.

9. A method for the conversion of a carbonaceous material comprising the steps of:
providing a carbonaceous material having a conversion temperature;
providing a powder material having a temperature higher than the conversion temperature of the carbonaceous material;
contacting the carbonaceous material and the powder material in an atmosphere configured to no more than partially oxidize carbon to CO₂, to obtain at least a partial conversion of the carbonaceous material into a converted material and a volatile product;
fluidizing the carbonaceous material and the heated powder material;
separating by specific gravity by directing a gas flow comprising the volatile product in an upwards direction to provide a fraction substantially comprising the volatile product and a second fraction substantially comprising additional components, said additional components being the powder material, converted material and optionally non-converted or partially converted carbonaceous material
removing the second fraction through a solid material outlet to adjust the level of fluidized solid material,
wherein the contacting between the carbonaceous material and the powder material takes place in at least two different flow regimes, and
wherein the conversion of the carbonaceous material takes place as the carbonaceous material contacts and is heated by the heated powder material.

10. The method for the conversion of carbonaceous material according to claim 9, wherein the velocity of the gas flow in the upwards direction is decreased to below an entrainment velocity of the additional components.

11. The method for the conversion of carbonaceous material according to claims 9 or 10, wherein pulses of gas is provided to fluidize the carbonaceous material and the heated powder material.

12. The method for the conversion of carbonaceous material according to claims 9 to 11, wherein the method comprises the additional step of:
providing a reactant gas or optionally a precursor for a reactant gas into the atmosphere configured to no more than partially oxidize carbon to CO₂,
optionally heating the precursor to develop the reactant gas and
contacting the reactant gas with a mixture of the heated pulverized material and the carbonaceous material.

13. The method for the conversion of carbonaceous material according to claims 9 to 12, wherein the powder material and carbonaceous material initially are contacted and transported in an entrained flow in the atmosphere configure to no more than partially oxidize carbon to CO₂ in a first direction and the gas pulses and/or reactant gas is provided in counter-flow from a second direction substantially opposite of the first direction.

14. The method for conversion of carbonaceous material according to claims 9 to 13, wherein the powder material is cement meal and preferably wherein the heating of the cement meal is carried out in a cement clinker manufacturing process, such as in the pre-heater of the cement clinker manufacturing process.

15. The method for conversion of carbonaceous material according to claims 9 to 14, wherein the carbonaceous material is selected from the group comprising alternative fuels, waste and/or biomass fuels.

16. A cement clinker manufacturing plant comprising the reactor according to any of claims 1 to 8.

## Patentansprüche

1. Reaktor zum Umwandeln eines kohlenstoffhaltigen Materials, wobei der Reaktor dazu ausgelegt ist, ein festes Pulvermaterial aufzunehmen, und einen oberen Abschnitt und einen unteren Abschnitt aufweist;
wobei der Reaktor umfasst:
mindestens einen Festmaterialeinlass zum Bereitstellen eines festen kohlenstoffhaltigen Materials und eines Pulvermaterials an den Reaktor,
mindestens einen Festmaterialauslass, der dazu ausgelegt ist, den Austrag von umgewandeltem kohlenstoffhaltigem Material und/oder einem Pulvermaterial zu ermöglichen, wobei der Auslass Einstellmittel umfasst, die dazu ausgelegt sind, den Füllstand oder die Menge des Festmaterials im Reaktor einzustellen,
Fluidisierungsmittel, die zum Fluidisieren von Pulvermaterial geeignet sind,
einen Gasauslass, der sich vorzugsweise im oberen Abschnitt des Reaktors befindet,
und Gas-Feststoff-Trennmittel, die dazu ausgelegt sind, ein Gas im Wesentlichen von einem Festmaterial zu trennen, wobei die Gas-Feststoff-Trennmittel eine Sektion des oberen Abschnitts des Reaktors sind, der einen größeren Strömungsquerschnitt als der untere Abschnitt des Reaktors aufweist, der dazu ausgelegt ist, Gas und Feststoffe in einer im Wesentlichen vertikalen Strömung zu trennen und die Geschwindigkeit des Gases auf unter eine Mitreißgeschwindigkeit der Feststoffe zu reduzieren,
wobei der Reaktor so ausgelegt ist, dass die Umwandlung des kohlenstoffhaltigen Materials erfolgt, wenn das kohlenstoffhaltige Material mit dem erhitzten Pulvermaterial in Kontakt kommt und davon erhitzt wird.

2. Reaktor zum Umwandeln eines kohlenstoffhaltigen Materials nach Anspruch 1, wobei sich der mindestens eine Festmaterialeinlass in einem oberen Abschnitt des Reaktors befindet.

3. Reaktor zum Umwandeln eines kohlenstoffhaltigen Materials nach Anspruch 1 oder Anspruch 2, wobei der Auslass eine Flüssigkeitsfangkonfiguration aufweist, welche die Einstellmittel bereitstellt, die den Festmaterialgehalt im Reaktor einstellen, wenn das Pulvermaterial fluidisiert wird.

4. Reaktor zum Umwandeln eines kohlenstoffhaltigen Materials nach Anspruch 3, wobei die Flüssigkeitsfangkonfiguration eine erste Leitung umfasst, die mit dem unteren Abschnitt des Reaktors strömungstechnisch verbunden ist, und ein unterer Abschnitt einer zweiten Leitung strömungstechnisch mit der ersten Leitung verbunden ist, wodurch ermöglicht wird, dass Pulver vom Reaktor durch die erste Leitung zu einem oberen Abschnitt der zweiten Leitung strömt.

5. Reaktor zum Umwandeln eines kohlenstoffhaltigen Materials nach Anspruch 4, wobei die erste Leitung dazu ausgelegt ist, durch Variation des Querschnittsabmessungswerts über die Länge der ersten Leitung eine Schutzschicht aus Feststoffen über mindestens einem Abschnitt der unteren Oberfläche der ersten Leitung bereitzustellen.

6. Reaktor zum Umwandeln eines kohlenstoffhaltigen Materials nach den Ansprüchen 4 bis 5, wobei die erste Leitung ein inneres Netz umfasst.

7. Reaktor zum Umwandeln eines kohlenstoffhaltigen Materials nach einem vorstehenden Anspruch, wobei der mindestens eine Festmaterialeinlass dazu ausgelegt ist, im Wesentlichen zu verhindern, dass stromaufwärtiges Prozessgas zusammen mit dem kohlenstoffhaltigen Material und/oder einem Pulvermaterial in den Reaktor strömt.

8. Reaktor zum Umwandeln eines kohlenstoffhaltigen Materials nach den Ansprüchen 4 bis 7, wobei der Gasauslass strömungstechnisch mit der zweiten Leitung verbunden ist.

9. Verfahren zur Umwandlung eines kohlenstoffhaltigen Materials, umfassend die Schritte zum:
Bereitstellen eines kohlenstoffhaltigen Materials, das eine Umwandlungstemperatur aufweist;
Bereitstellen eines Pulvermaterials, das eine Temperatur aufweist, die höher als die Umwandlungstemperatur des kohlenstoffhaltigen Materials ist;
Kontaktieren des kohlenstoffhaltigen Materials und des Pulvermaterials in einer Atmosphäre, die dazu ausgelegt ist, Kohlenstoff nicht mehr als teilweise zu COzzu oxidieren, um zumindest eine teilweise Umwandlung des kohlenstoffhaltigen Materials in ein umgewandeltes Material und ein flüchtiges Produkt zu erhalten;
Fluidisieren des kohlenstoffhaltigen Materials und des erhitzten Pulvermaterials;
Trennen nach spezifischem Gewicht durch Richten eines Gasstroms, der das flüchtige Produkt umfasst, in eine Aufwärtsrichtung, um eine Fraktion, die im Wesentlichen das flüchtige Produkt umfasst, und eine zweite Fraktion, die im Wesentlichen zusätzliche Komponenten umfasst, bereitzustellen, wobei die zusätzlichen Komponenten das Pulvermaterial, umgewandeltes Material und optional nicht umgewandeltes Material oder teilweise umgewandeltes kohlenstoffhaltiges Material sind,
Entfernen der zweiten Fraktion durch einen Festmaterialauslass, um den Füllstand des fluidisierten Festmaterials einzustellen,
wobei das Kontaktieren zwischen dem kohlenstoffhaltigen Material und dem Pulvermaterial in mindestens zwei unterschiedlichen Abflussregimen stattfindet, und
wobei die Umwandlung des kohlenstoffhaltigen Materials erfolgt, wenn das kohlenstoffhaltige Material mit dem erhitzten Pulvermaterial in Kontakt kommt und davon erhitzt wird.

10. Verfahren zur Umwandlung von kohlenstoffhaltigem Material nach Anspruch 9, wobei die Geschwindigkeit des Gasstroms in Aufwärtsrichtung auf unter eine Mitreißgeschwindigkeit der zusätzlichen Komponenten verringert wird.

11. Verfahren zur Umwandlung von kohlenstoffhaltigem Material nach Anspruch 9 oder 10, wobei Gasimpulse bereitgestellt werden, um das kohlenstoffhaltige Material und das erhitzte Pulvermaterial zu fluidisieren.

12. Verfahren zur Umwandlung von kohlenstoffhaltigem Material nach den Ansprüchen 9 bis 11, wobei das Verfahren den zusätzlichen Schritt umfasst, zum:
Bereitstellen eines Reaktionsgases oder optional eines Vorprodukts für ein Reaktionsgas in die Atmosphäre, das dazu ausgelegt ist, Kohlenstoff nicht mehr als teilweise zu CO₂zu oxidieren,
optional Erhitzen des Vorprodukts, um das Reaktionsgas zu entwickeln, und
Kontaktieren des Reaktionsgases mit einem Gemisch aus dem erhitzten pulverisierten Material und dem kohlenstoffhaltigen Material.

13. Verfahren zur Umwandlung von kohlenstoffhaltigem Material nach den Ansprüchen 9 bis 12, wobei das Pulvermaterial und das kohlenstoffhaltige Material zunächst kontaktiert und in einer mitgerissenen Strömung in der Atmosphäre, die dazu ausgelegt ist, Kohlenstoff nicht mehr als teilweise zu CO₂ zu oxidieren, in einer ersten Richtung transportiert werden, und die Gasimpulse und/oder das Reaktionsgas im Gegenstrom aus einer zweiten Richtung, im Wesentlichen entgegengesetzt zur ersten Richtung, bereitgestellt werden.

14. Verfahren zur Umwandlung von kohlenstoffhaltigem Material nach den Ansprüchen 9 bis 13, wobei das Pulvermaterial Zementmehl ist, und wobei das Erhitzen des Zementmehls vorzugsweise in einem Zementklinker-Herstellungsprozess, wie etwa im Vorerhitzer des Zementklinker-Herstellungsprozesses, durchgeführt wird.

15. Verfahren zur Umwandlung von kohlenstoffhaltigem Material nach den Ansprüchen 9 bis 14, wobei das kohlenstoffhaltige Material aus der Gruppe ausgewählt wird, die alternative Brennstoffe, Abfall und/oder Biomasse-Brennstoffe umfasst.

16. Anlage zur Herstellung von Zementklinker, umfassend den Reaktor nach einem der Ansprüche 1 bis 8.

## Revendications

1. Réacteur pour convertir un matériau carboné, le réacteur étant configuré pour recevoir un matériau pulvérulent solide et présentant une partie supérieure et une partie inférieure ;
le réacteur comprenant :
au moins une entrée de matériau solide pour fournir un matériau carboné solide et un matériau pulvérulent au réacteur,
au moins une sortie de matériau solide configurée pour permettre le retrait du matériau carboné converti et/ou d'un matériau pulvérulent, ladite sortie comprenant des moyens d'ajustement configurés pour ajuster le niveau, ou la quantité, de matériau solide dans le réacteur,
des moyens de fluidisation conçus pour fluidiser le matériau pulvérulent,
une sortie de gaz située de préférence dans la partie supérieure du réacteur,
et des moyens de séparation gaz-solide configurés pour séparer sensiblement un gaz d'un matériau solide, dans lequel les moyens de séparation gaz-solide sont une section de la partie supérieure du réacteur présentant une zone d'écoulement plus grande que la partie inférieure du réacteur configurée pour séparer un gaz et des solides dans un écoulement sensiblement vertical et pour réduire la vitesse du gaz au-dessous d'une vitesse d'entraînement des solides,
dans lequel le réacteur est configuré de telle sorte que la conversion du matériau carboné ait lieu au fur et à mesure que le matériau carboné entre en contact avec le matériau pulvérulent chauffé et est chauffé par celui-ci.

2. Réacteur pour convertir un matériau carboné selon la revendication 1, dans lequel la au moins une entrée de solide est située dans une partie supérieure du réacteur.

3. Réacteur pour convertir un matériau carboné selon la revendication 1 ou la revendication 2, dans lequel la sortie présente une configuration de piège à fluide qui fournit le moyen d'ajustement qui ajuste le niveau de matériau solide dans le réacteur lorsque le matériau pulvérulent est fluidisé.

4. Réacteur pour convertir un matériau carboné selon la revendication 3, dans lequel la configuration de piège à fluide comprend un premier conduit qui est raccordé de manière fluidique à la partie inférieure du réacteur et une partie inférieure d'un second conduit est raccordée de manière fluidique au premier conduit, permettant ainsi à la poudre de s'écouler du réacteur, à travers le premier conduit, vers une partie supérieure du second conduit.

5. Réacteur pour convertir un matériau carboné selon la revendication 4, dans lequel le premier conduit est configuré pour fournir une couche protectrice de solides au-dessus d'au moins une partie de la surface inférieure du premier conduit en faisant varier la valeur de dimension transversale sur toute la longueur du premier conduit.

6. Réacteur pour convertir un matériau carboné selon les revendications 4 à 5, dans lequel le premier conduit comprend un maillage interne.

7. Réacteur pour convertir un matériau carboné selon une quelconque revendication précédente, dans lequel la au moins une entrée de matériau solide est configurée pour empêcher sensiblement un gaz de traitement en amont de circuler dans le réacteur conjointement avec le matériau carboné et/ou un matériau pulvérulent.

8. Réacteur pour convertir un matériau carboné selon les revendications 4 à 7, dans lequel la sortie de gaz est raccordée de manière fluidique au second conduit.

9. Procédé pour la conversion d'un matériau carboné comprenant les étapes consistant à :
fournir un matériau carboné présentant une température de conversion ;
fournir un matériau pulvérulent présentant une température supérieure à la température de conversion du matériau carboné ;
mettre en contact le matériau carboné et le matériau pulvérulent dans une atmosphère configurée pour oxyder au maximum partiellement le carbone en CO₂, pour obtenir au moins une conversion partielle du matériau carboné en un matériau converti et un produit volatil ;
fluidiser le matériau carboné et le matériau pulvérulent chauffé ;
séparer par gravité spécifique en dirigeant un flux de gaz comprenant le produit volatil dans une direction vers le haut pour fournir une fraction comprenant sensiblement le produit volatil et une seconde fraction comprenant sensiblement des composants supplémentaires, lesdits composants supplémentaires étant le matériau pulvérulent, le matériau converti et, facultativement, le matériau carboné non converti ou partiellement converti
enlever la seconde fraction par une sortie de matériau solide pour ajuster le niveau de matériau solide fluidisé,
dans lequel la mise en contact entre le matériau carboné et le matériau pulvérulent a lieu dans au moins deux régimes d'écoulement différents, et
dans lequel la conversion du matériau carboné a lieu au fur et à mesure que le matériau carboné entre en contact avec le matériau pulvérulent et est chauffé par celui-ci.

10. Procédé de conversion d'un matériau carboné selon la revendication 9, dans lequel la vitesse du flux de gaz dans la direction vers le haut est réduite pour être inférieure à une vitesse d'entraînement des composants supplémentaires.

11. Procédé de conversion d'un matériau carboné selon les revendications 9 ou 10, dans lequel des impulsions de gaz sont fournies pour fluidiser le matériau carboné et le matériau pulvérulent chauffé.

12. Procédé de conversion d'un matériau carboné selon les revendications 9 à 11, dans lequel le procédé comprend l'étape supplémentaire consistant à :
fournir un gaz réactif ou, facultativement, un précurseur pour un gaz réactif dans l'atmosphère configuré pour oxyder au maximum partiellement le carbone en CO₂,
facultativement, chauffer le précurseur pour développer le gaz réactif et
mettre en contact le gaz réactif avec un mélange du matériau pulvérisé chauffé et du matériau carboné.

13. Procédé de conversion d'un matériau carboné selon les revendications 9 à 12, dans lequel le matériau pulvérulent et le matériau carboné sont initialement mis en contact et transportés dans un flux entraîné dans l'atmosphère configuré pour oxyder au maximum partiellement le carbone en CO₂ dans une première direction et les impulsions de gaz et/ou un gaz réactif sont fournis à contre-courant depuis une seconde direction sensiblement opposée à la première direction.

14. Procédé de conversion d'un matériau carboné selon les revendications 9 à 13, dans lequel le matériau pulvérulent est de la farine de ciment et, de préférence, dans lequel le chauffage de la farine de ciment est effectué dans un processus de fabrication de clinker de ciment, tel que dans le préchauffeur du processus de fabrication de clinker de ciment.

15. Procédé de conversion d'un matériau carboné selon les revendications 9 à 14, dans lequel le matériau carboné est choisi dans le groupe comprenant des carburants alternatifs, des déchets et/ou des biocombustibles.

16. Usine de fabrication de clinker de ciment comprenant le réacteur selon l'une quelconque des revendications 1 à 8.
